# EUROPEAN PATENT APPLICATION

(11) **EP 1 403 593 A2**
(43) Date of publication of application: **31.03.2004**
(21) Application number: 03021843.2
(22) Date of filing: 26.09.2003
(51) Int. Cl.: F24H 1/20, F24D 17/00

(54) **Water heater**

(30) Priority: 26.09.2002 IT PI20020053; 18.10.2002 IT PI20020057
(71) Applicant: Occhipinti, Carmelo, 97100 Ragusa (IT)
(72) Inventor: Occhipinti, Carmelo, 97100 Ragusa (IT)
(74) Representative: Celestino, Marco

(57) **Abstract**

A proportional and selective heating boiler has a reservoir (1) in which sanitary water to be heated is supplied, coming from a water network, through an inlet (2) and a duct (15) and is heated in reservoir by at least a first and a second heating means, such as a couple of electrical resistances (10) and (11) or alternatively coil tubes in which a heating fluid flows. The water is drawn off reservoir (1) at the desired temperature from an outlet (3) and a duct (16) connected to different deliveries. First heating means (11) are arranged in the lower part of the cylindrical portion of the reservoir near water inlet (2). The second heating means (10) is located in the upper portion of reservoir (1), and precisely near water outlet (3). The boiler allows rational exploitation of the heating power and a considerable energy saving. It reduces the time for providing a low amount of hot water without reducing the overall capacity.

## Description

### Field of the invention

The present invention relates to a water heater, or boiler, used to obtain hot water for sanitary water, agricultural, industrial uses, for heating, for swimming pools, etc., of the type comprising a reservoir which contains water at heat.

Furthermore, the invention relates to a method for the production of such a boiler.

### Description of the prior art

As known, a boiler used for heating sanitary water in a building, for example a house, can be powered by electricity, gas or solar energy.

In particular, an electrical boiler makes use of the heat generated by an electrical resistance for heating the water contained in a reservoir.

The main advantages of an electrical boiler are a low cost and an easy installation, since it is sufficient to connect it to hot/cold water conduits and to turn on the voltage supply. Furthermore, differently from other systems of heat generation, it does not require presence of specialized operators at the moment of installation.

Alternatively, the heat is obtained either burning a gas, usually methane, in a combustion chamber, or exploiting solar energy by means of suitable panels that absorb the energy turning infrared waves into heat.

The water contained in the reservoir can be heated either directly, where the heat source is integrated in the boiler, or indirectly through heat exchangers.

Indirect heating requires heat exchangers in the form of a coil tube, a U-shaped tube or tubes of other shape, in which a heating liquid flows, advantageously water, coming from a reservoir. In this case, the heating tube exchanges heat with the water in the boiler.

More precisely, the heating duct connected to the heating system, either methane or solar heating, exchanges heat with water coming from a sanitary water network, usually supplied into the boiler at a low part and drawn off at an upper part thereof.

A problem common to all the types of boilers above cited is power setting. A high power causes higher energy consumption and plant costs, even if the desired temperature is reached in less time. A low power allows to save energy and plant costs, but require more time.

In particular, solar heating allows high energy saving, but the power cannot be managed like in other systems such as gas or electric heating.

Mixed plants also exist, where solar power is used for pre-heating the water and cooperates to achieve the desired temperature along with electric power, or gas power, which is summed to the previous. Even in this case, however, the time for having hot water at the desired temperature is related to the overall power available.

In case of direct heating, either electric or gas heating, the power is supplied when the water temperature contained in the boiler drops below a certain set-point value; a thermostat either turns the electrical resistance on, or supplies gas in the combustion chamber, for returning the water at the set temperature.

In case of indirect heating, the power is transmitted, usually, by a heating coil tube comprising a plurality of coil turns all of same shape and of equal height arranged in the boiler either for all its height or only in the low part thereof.

The heating tube raises substantially homogeneously the temperature of all the water contained in the reservoir starting from its contact surface.

However, the size of the boiler affects the time, at a same power, to reach a desired water temperature. For example, a 500 litres boiler can provide water at 60°C in a time longer than a 200 litres boiler, under a same power. The latter, however, having less capacity, can satisfy only a smaller water demand.

Furthermore, the boiler is sized for a optimal maximum capacity, even if in many cases the water demand is less than the capacity. For example, a 30 litres boiler, used as water heater for washing dishes of for making single showers can be insufficient for other uses. On the other hand, a 80-90 litres boiler often is used for a hot water demand less than the maximum capacity. In such cases, there is a considerable waste since the boiler maintains the set temperature for all the water in it contained.

### Summary of the invention.

It is therefore a feature of the present invention to provide a boiler for rational exploitation of the heating power and to allow a considerable energy saving.

It is a particular a feature of the present invention to provide a boiler capable of reducing the time for providing a low amount of hot water without reducing the overall capacity.

These and other objects are accomplished by the boiler, according to the present invention, comprising:
- a reservoir having a lower portion, a central portion and an upper portion, in which water to heat is supplied through an inlet and drawn off on demand through an outlet by at least an user;
- first heating means suitable for exchanging heat with water supplied in the reservoir at the lower portion, or at the lower and central portions;
- at least second heating means suitable for exchanging heat with water supplied in the reservoir at the upper portion of the reservoir same, near the outlet of the water heated in the reservoir,
- said first heating means raising the water temperature at the water inlet in said reservoir, inducing a slow convection flow that brings the hot water towards said second heating means,
- said second heating means raising quickly the water temperature only at the outlet of the water at the upper part of said reservoir.

The heating means can be an electrical resistance or a coil tube in which heating liquid flows.

If said heating means are of electrical type their position can be selected from the group:
arrangement at side walls of said reservoir;
arrangement at the lower portion and at the upper
portion of the reservoir.

Advantageously, third heating means are provided located between said first and said second heating means at a central portion of said reservoir.

In a possible exemplary embodiment, a control board is provided to switch heating power selectively to said first heating means, to said second heating means, to both first and second heating means, and in case of three heating means to all and three or to a combination thereof.

The first, second and third heating means can be coil tube portions in which heating liquid flows hydraulically connected to form a resulting coil tube that crosses said reservoir for all its length, said resulting coil tube having a coil density more concentrated at said first and said second heating means and more sparse at said third heating means.

In this case, said third heating means has preferably function of connection between said first and said second heating means and is a substantially straight tubular portion.

Preferably, the apportionment of the exchange surface of each heating means of said resulting coil tube is the following:
- 5÷40% of the overall length of said reservoir for said second heating means;
- 25÷35% of the overall length of the reservoir for said third heating means;
- 5÷50% of the overall length of the reservoir for said first heating means.

In a preferred exemplary embodiment the apportionment of the exchange surface of each heating means of said resulting coil tube is the following:
- 25÷35% of the overall length of said reservoir for said second heating means;
- 25÷35% of the overall length of the reservoir for said third heating means;
- 35÷45% of the overall length of the reservoir for said first heating means.

The water heated can be drawn off from said reservoir in a way selected from the group:
- a tube that comes out from said reservoir in its highest point;
- a horizontal tube that comes out from a side wall of the reservoir and an elbow portion that has its open end in the highest point.

The water that enters in said reservoir has an inlet flow in a way selected from the group:
- a tube with outlet oriented towards the bottom of the reservoir;
- a tube with outlet provided with jet spoiling elements that break turbulent flow in the mass of water at the lower part of the reservoir and then avoids a quick mixing of the hot and cold water.

### Brief description of the drawings

The invention will now shown with the following description of exemplary embodiments thereof, exemplifying but not limitative, with reference to the attached drawings wherein:

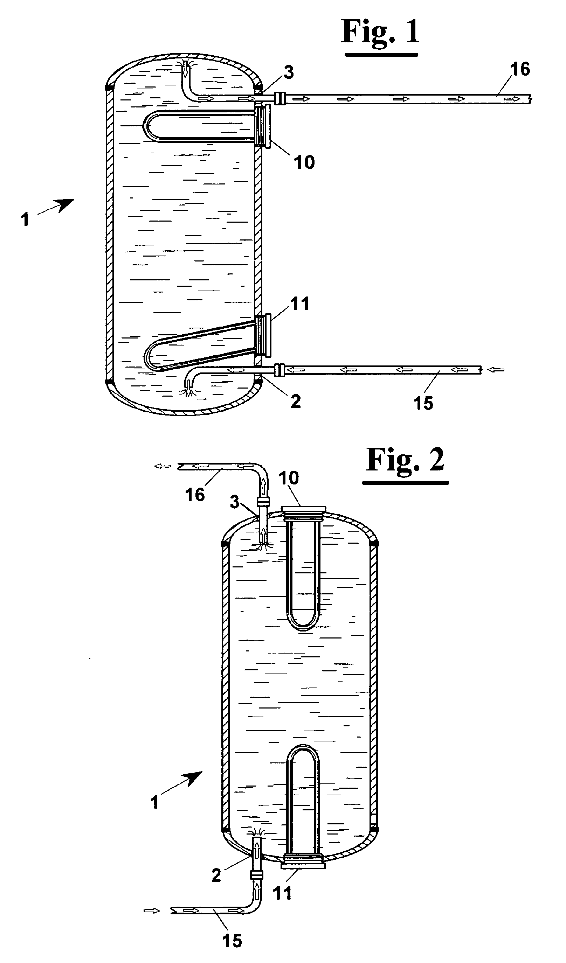

- figure 1 shows diagrammatically in a partially cross sectioned view a first exemplary embodiment of a boiler, according to the invention;
- figures from 2 to 10 show diagrammatically in partially cross sectioned views some possible alternative exemplary embodiments of the boiler of figure 1;
- figures from 11 to 13 show in detail in partially cross sectioned views some possible embodiments of a feeding duct of sanitary water into the boiler that maintain laminar flow of the water in the boiler;
- figures 14 and 15 show two possible exemplary embodiments of an hydraulic circuit coupled to the boiler according to the invention;
- figure 16 shows diagrammatically in a partially cross sectioned view a boiler of prior art with electrical resistance;
- figure 17 shows qualitatively the trend of water temperature in the boiler of figure 16 versus height and time;
- figure 18 shows diagrammatically in a partially cross sectioned view an exemplary embodiment of the boiler, according to the invention;
- figure 19 shows qualitatively the trend of water temperature in the boiler of figure 18 versus height and time;

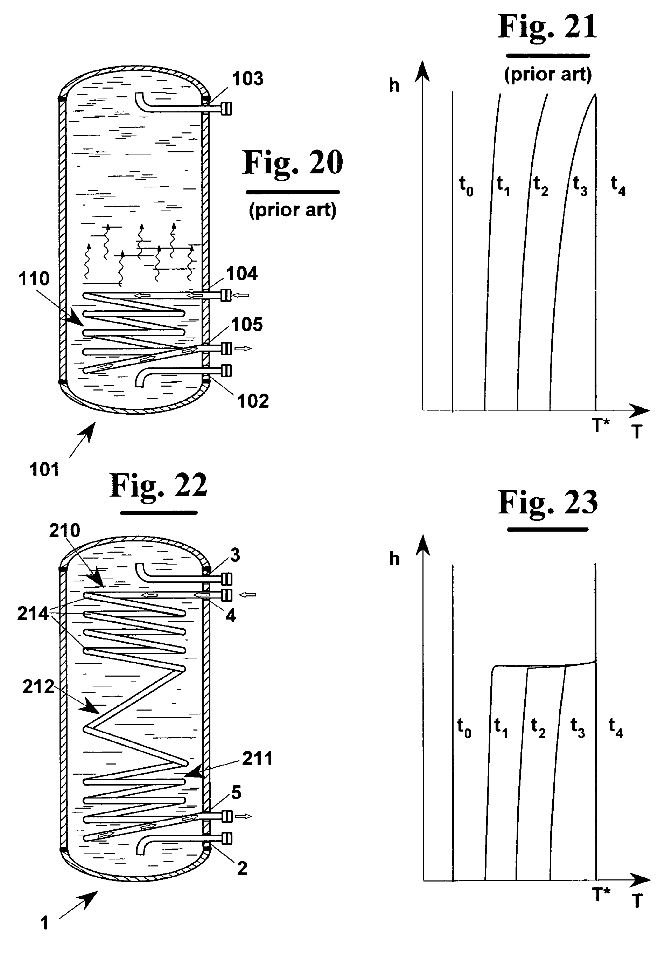

- figure 20 shows diagrammatically in a partially cross sectioned view a boiler of prior art with coil tube;
- figure 21 shows qualitatively the trend of water temperature in the boiler of figure 20 versus height and time;
- figure 22 shows diagrammatically in a partially cross sectioned view a boiler, according to the invention;
- figure 23 shows qualitatively the trend of water temperature in the boiler of figure 22 versus height and time, when two heating means are operated at the same time.

### Description of the preferred exemplary embodiment

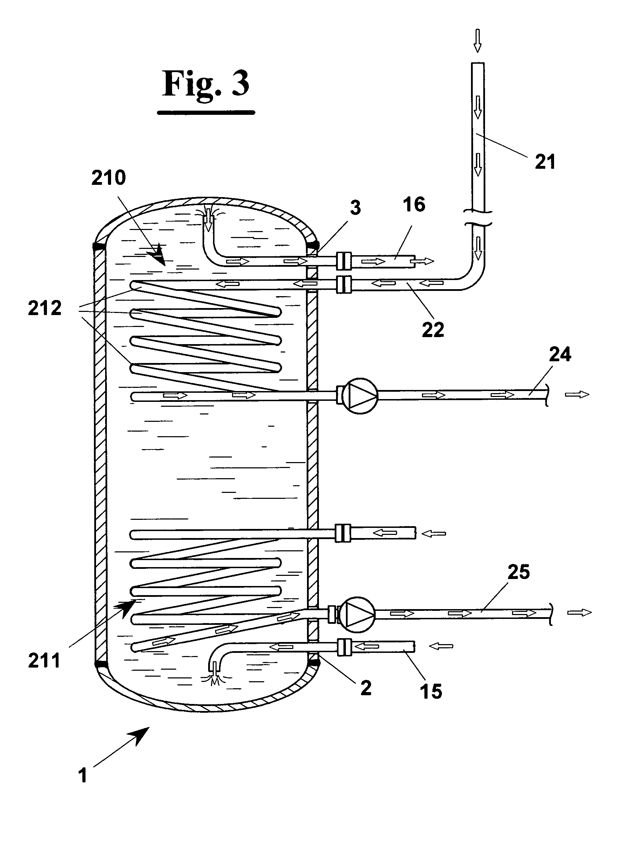

With reference to figure 1, a proportional and selective heating boiler, according to the invention, comprises a reservoir 1 in which sanitary water to be heated is supplied, coming from a water network, through an inlet 2 and a duct 15. In particular, the water that enters reservoir 1 has an inlet flow oriented towards the bottom of reservoir 1 same. The sanitary water is heated in reservoir 1, by at least a first and a second heating means, for example a couple of electrical resistances 10 and 11 (figures 1 and 2), or alternatively, by means of two coil tubes 210 and 211 in which a heating fluid flows, for example water (figure 3).

The water is, moreover, drawn off reservoir 1 at the desired temperature from an outlet 3 and a duct 16 connected to different deliveries, not shown.

In particular, second heating means 10, or 210, is located in the upper portion of reservoir 1, and precisely near water outlet 3. First heating means 11, or 211, is arranged in the lower part of the cylindrical portion of the reservoir near water inlet 2.

In case electrical resistances are used, they can be arranged at the bottom and at the top of reservoir 1, and also inlet 2 and outlet 3 of the sanitary water can be arranged at the bottom and at the top of reservoir 1 (figure 2).

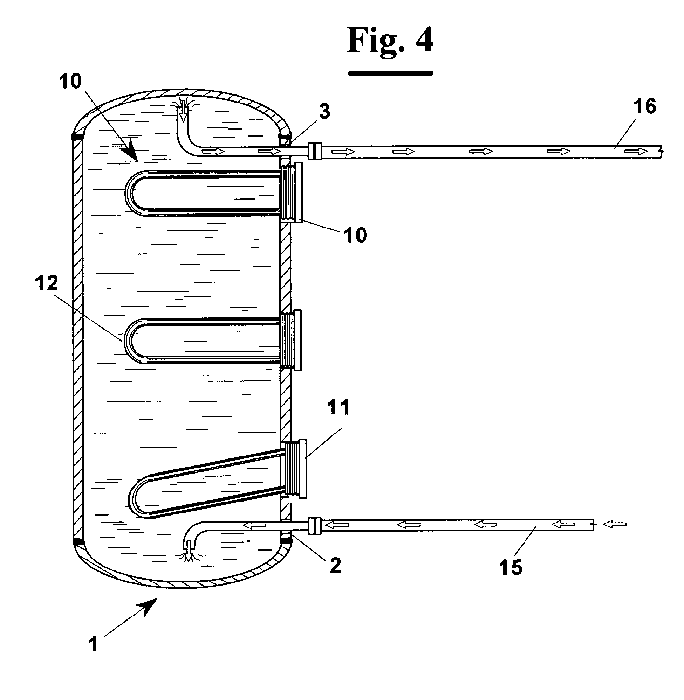

In figure 4 an exemplary embodiment is shown alternative to the previous where a third heating means, for example a resistance 12, is arranged between the upper heating means 10 and the lower heating means 11. This solution can be provided, for example, in case of large reservoirs or for heating much more water at the upper part of reservoir 1.

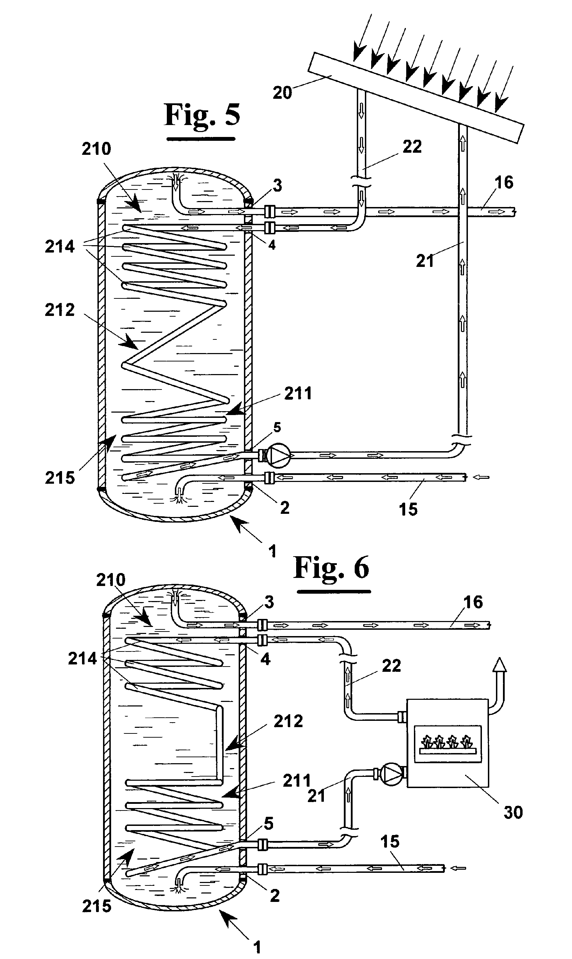

As shown in figures 4 and 5 the third heating means can be a coil tube 212 arranged connected hydraulically to coil tubes 210 and 211 in order to obtain a resulting coil tube 215 that crosses reservoir 1 for all its length. In particular, in the case of figure 5 the water is heated by a solar panel 20 whereas in the case shown in figure 6 the heating fluid receives the heat necessary to raise the water temperature of reservoir 1 by an electrical resistance or by a stove 30 supplied with gas or diesel oil.

According to the invention, the central portion 212 of the resulting coil tube 215 has less coils than the two extreme portions 210 and 211. More in detail, at the two extreme portions 210 and 211 where the coils are enough dense an higher amount of heat is exchanged, whereas at a central portion 212 where the coils are less, a smaller amount of heat is exchanged. The exchange in the lower zone of reservoir 1 generates, as well known, convection flow that keep the cold water towards below sending the hot water towards the above, causing the upper part at outlet 3 to have the hottest water. This way hot water at the desired temperature is very quickly available.

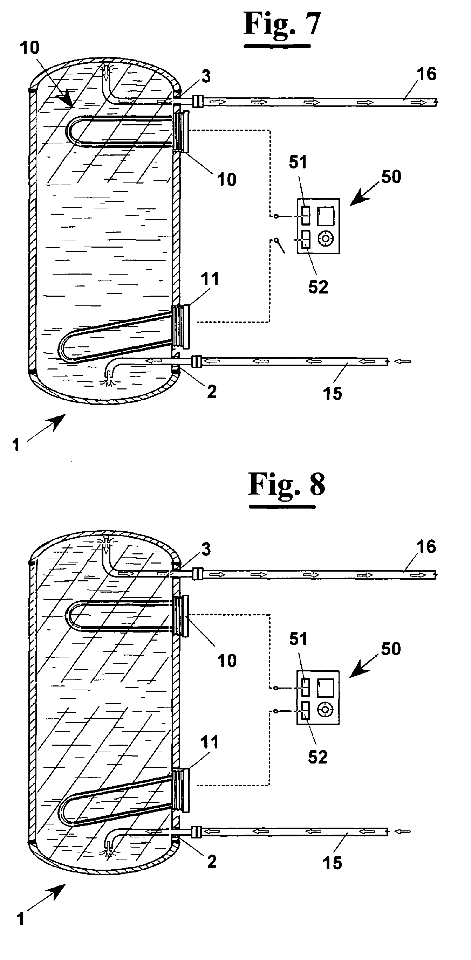

As shown in figures from 7 to 10, the heating means can be operatively connected to a control board 50. This way, by means of switches 51 and 52 or of a control unit, a heating means can be singularly operated, for example upper electrical resistance 10 (figure 7) or at the same time both resistances 10 and 11 (figure 8), causing the water of reservoir 1 to be heated quickly, since the two hatched zones of figures 7 and 8 are both heated directly.

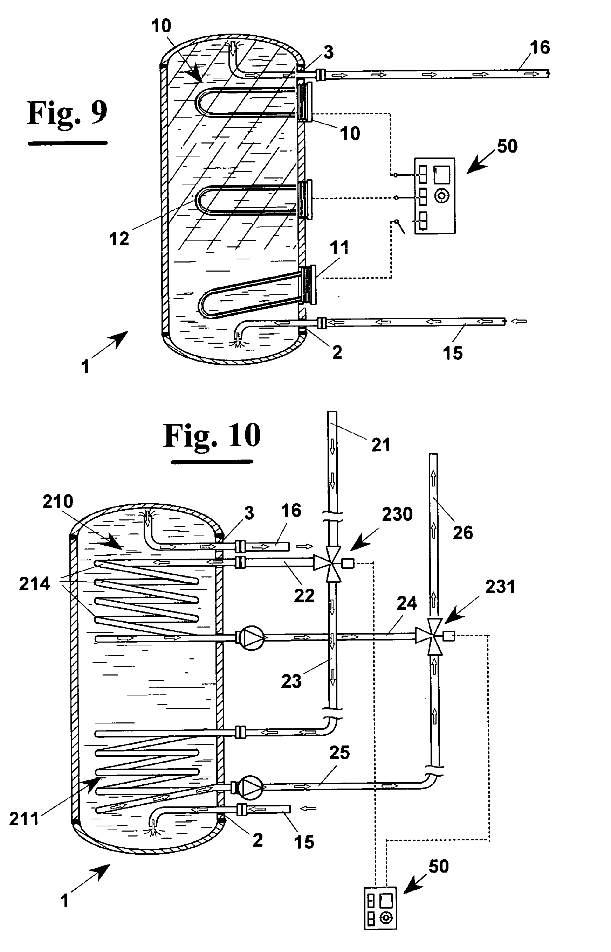

Furthermore, in case of large reservoirs it is possible to turn on at the same time the third resistance 12 and the first resistance 10 (figure 9) for having a much higher amount of hot water in the upper part of reservoir 1.

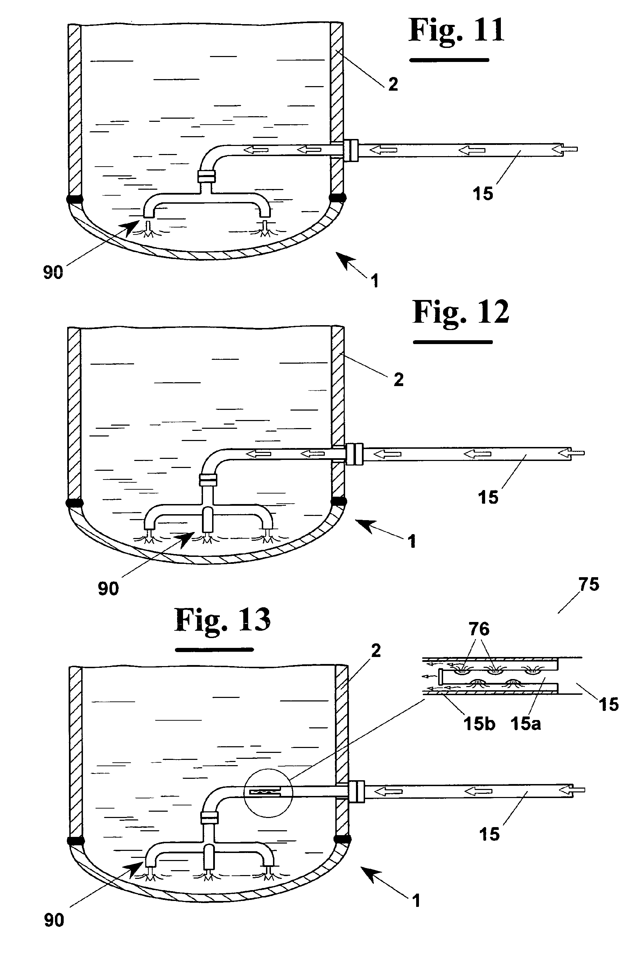

What above said can be made also in case coil tubes in which a heating fluid flows are used as heating means (figure 10).

Such solution allows a rational exploitation of the energy, since, by suitably adjusting the switches of the control board it is possible to turn on the heating means that allow to bring at a desired temperature only the demanded amount of water. In particular, this case (figure 7) can be applied when only a small amount of water is demanded, for example for a shower or for washing dishes, so that not all the water contained in reservoir 1 is to be heated. The case, instead, diagrammatically shown in figure 8 occurs when there is need of a significant amount of water, but after a longer time, where the sole upper resistance 10 is not sufficient to heat all the demanded amount of water.

In figures from 11 to 13 some embodiments of the invention are shown that allow to increase water stratification as above described. A first solution provides jet spoiling elements 90 arranged at the end of water feeding duct 15 into boiler 1. This arrangement avoids that turbulent flow occurs in the mass of water at the lower part of reservoir 1 and then that hot and cold water mix with each other.

Another arrangement of the invention to assure water stratification in reservoir 1 is shown in detail in enlargement 75 of figure 13. In this case, the water is supplied to reservoir 1 from a duct 15 having a double tube portion. More in detail, inner duct 15a of the double tube portion has a plurality of holes 76 that spoil the water jet entering end portion 15b of duct 15 and then reservoir 1 (figure 13).

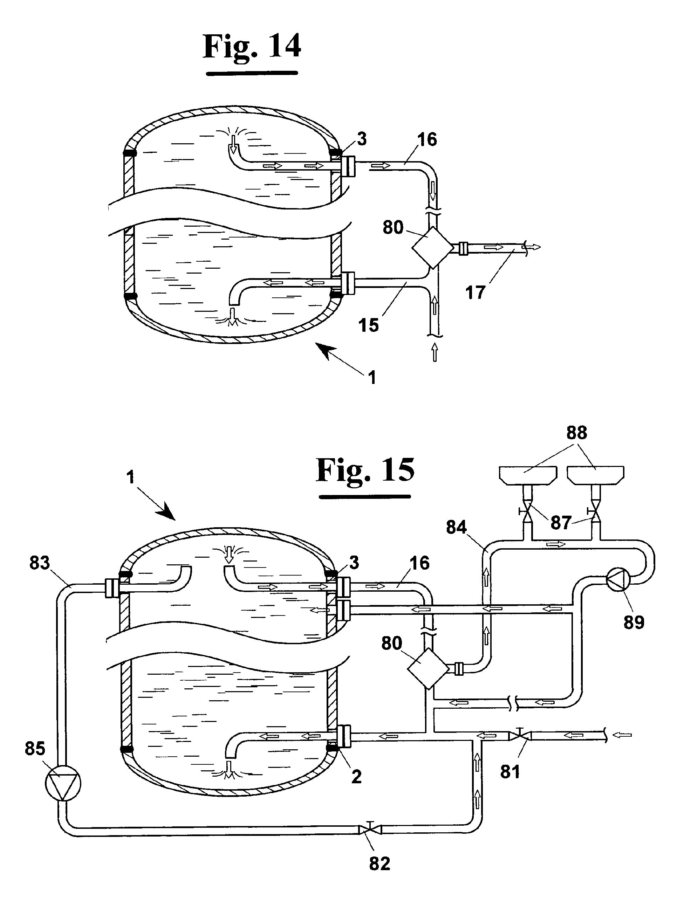

In figure 14 a further exemplary embodiment is shown for boiler 1. In this case duct 16 for drawing water off reservoir 1 and feeding duct 15 are connected by a mixer 80 that mixes the inlet and outlet flows in a predetermined way. In particular, the use of mixer 80 provides mixing the two flows of water in order to supply the deliveries, not shown, with a resulting water flow 17 at a desired temperature.

A further exemplary embodiment shown in figure 15 couples boiler 1 to an hydraulic circuit which is arranged for periodically treating with very hot water all the sanitary water circuit. In particular, the treatment can be carried out for disinfecting the sanitary circuit in order to avoid that bacteria, such as Legionella, moulds or viruses can lie concealed in the boiler and cause the relative pathologies to transfer to people. For preventing bacteria to proliferate, the circulating water must be heated at least at 60°C.

In particular, with reference to the hydraulic scheme of figure 15 during the treatment of the sanitary circuit the boiler 1 is disconnected from the network closing valve 81 on the supply duct. Then, a valve 82 is open arranged along a circulation duct 83 and recirculation of water in boiler 1 activated by a pump 85. The treatment temperature, for example 65 °C, is chosen through mixer 80.

Once effected the treatment in boiler 1 all the sanitary circuit is treated up to deliveries 88, by opening valve 81, if still closed.

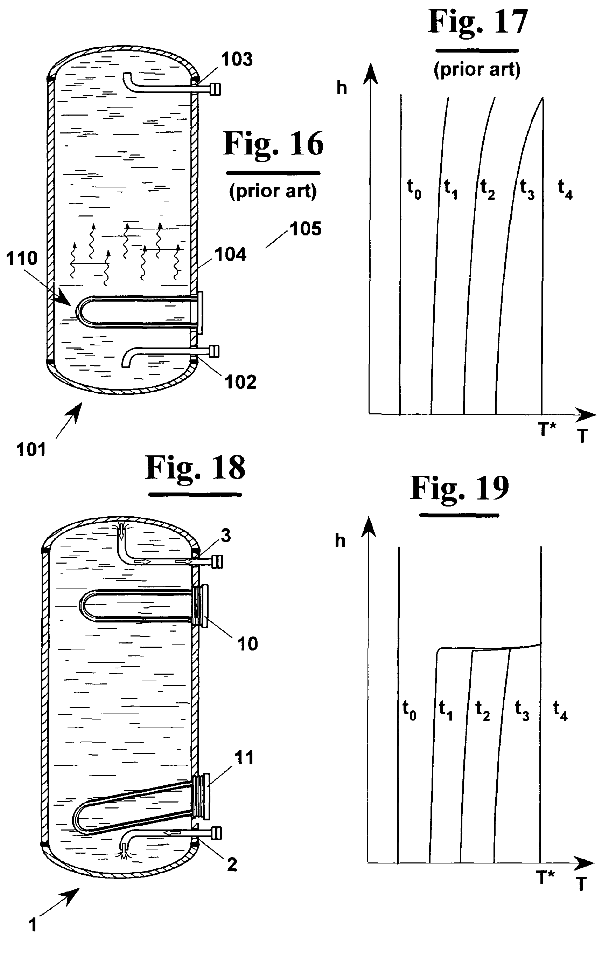

In figures from 16 to 19 another relevant aspect of the present invention is shown by a comparison with a boiler of prior art, given in figure 16.

In particular, the heat exchange in the highest part of reservoir 1 of figures 1-10 produces hot water that remains in that zone, creating a hot water region at outlet 3. This way, hot water is quickly available at the desired temperature, as diagrammatically shown by the T(h,t) diagram of figure 19.

More precisely, figure 19 shows qualitatively the trend of temperature (T) in the mass of water contained in reservoir 1, versus height (h) and time (t). It is observed that boiler 1, according to the invention, provides a certain amount of hot water at the desired temperature T* after a brief time, t₁. On the contrary water at temperature T* with a boiler 101 of prior art (figure 16) is available only after a time t₄>>tₗ (figure 17), since the mass of water contained in the reservoir is heated substantially with uniformity. Figures 17 and 19 are to be intended without that water is drawn off.

One of the main advantages of the invention is the availability of hot water at the maximum temperature available very quickly, starting from the instant when all the water of the boiler is cold (starting time t₀).

It must be noted, however, when the water is drawn off the solution proposed gives a further considerable advantage. In fact, the presence of upper resistance 10 increases water stratification with respect to boiler 101 of figure 11. For this reason when drawing hot water off this water maintains the maximum temperature for half the capacity of the reservoir, whereas in the traditional boilers the temperature starts dropping almost immediately, slowly but sensibly.

What above described is also valid in case a coil tube is used in which a heating fluid flows as heating means (figures from 20 to 23).

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Boiler comprising:
- a reservoir having a lower portion, a central portion and a upper portion, in which water to heat is supplied through an inlet and drawn off on demand through an outlet by at least an user;
- first heating means suitable for exchanging heat with water supplied in the reservoir at the lower portion, or both at the lower and central portions;
**characterised in that** it comprises:
- at least second heating means suitable for exchanging heat with water supplied in the reservoir at the upper portion of the reservoir same, near the outlet of the water heated in the reservoir,
- said first heating means raising the water temperature at the water inlet in said reservoir, inducing a slow convection flow that brings the hot water towards said second heating means,
- said second heating means raising quickly the water temperature only at the outlet of the water at the upper part of said reservoir.

2. Boiler, according to claim 1, wherein a control board is provided suitable for laying heating power selectively to said first heating means, or to said second heating means, or to both.

3. Boiler, according to claim 5, wherein said heating means are of electrical type and their position is selected from the group:
arrangement at side walls of said reservoir;
arrangement at the lower portion and at the upper portion of the reservoir.

4. Boiler, according to claim 1, comprising a third heating means located between said first and said second heating means at a central portion of said reservoir.

5. Boiler, according to claim 4, wherein said first, said second and said third heating means are coil tube portions in which heating liquid flows hydraulically connected to form a resulting coil tube that crosses said reservoir for all its length, said resulting coil tube having a coil density more concentrated at said first and said second heating means and more sparse at said third heating means.

6. Boiler, according to claim 5, wherein said third heating means has substantially function of connection between said first and said second heating means and is a substantially straight tubular portion.

7. Boiler, according to claim 5, where the apportionment of the exchange surface of each heating means of said resulting coil tube is the following:
- 5÷40% of the overall length of said reservoir for said second heating means;
- 25÷35% of the overall length of the reservoir for said third heating means;
- 5÷50% of the overall length of the reservoir for said first heating means.

8. Boiler, according to claim 7, where the apportionment of the exchange surface of each heating means of said resulting coil tube is the following:
- 25÷35% of the overall length of said reservoir for said second heating means;
- 25÷35% of the overall length of the reservoir for said third heating means;
- 35÷45% of the overall length of the reservoir for said first heating means.

9. Boiler, according to claim 1, where the water heated is drawn off from said reservoir in a way selected from the group:
- a tube that comes out from said reservoir in its highest point.
- a horizontal tube that comes out from a side wall of the reservoir and an elbow portion that has its open end in the highest point.

10. Boiler, according to claim 1, where the water that enters in said reservoir has an inlet flow in a way selected from the group:
- a tube with outlet oriented towards the bottom of the reservoir;
- a tube with outlet provided with jet spoiling elements that break turbulent flow in the mass of water at the lower part of the reservoir and then avoid a quick mixing of the hot and cold water.
